# EUROPEAN PATENT APPLICATION

(11) **EP 1 471 405 A1**
(43) Date of publication of application: **27.10.2004**
(21) Application number: 01989063.1
(22) Date of filing: 12.11.2001
(51) Int. Cl.: G06F 1/00, H04L 9/00

(54) **METHOD AND DEVICE FOR PROTECTING INFORMATION AGAINST UNAUTHORISED USE**

(71) Applicant: Network Research Lab, Ltd., Dublin 2 (IE)
(72) Inventor: FADYUSHIN, Alexey Borisovich, Moscow region (RU)
(74) Representative: Engel, Christoph Klaus
(86) International application number: PCT/RU2001/000476
(87) International publication number: WO 2003/023577

(57) **Abstract**

The inventive method and device for protecting information against unauthorised use makes it possible to detect a user who submits a copy for unauthorised copying. Information obtained by the user is encrypted by means of asymmetrical cryptography method using said user's key which is received by a distributor of information. The information is decoded before the use thereof with the aid of a private key of the user. In order to improve the protection, decryption can be carried out directly in the CPU of the computer of the user in such a way that the decrypted information does not exist outside the said processor.

## Description

### PERTINENT ART

This invention relates to protection of programs and data against unauthorized use. It specifically relates to system and method of protection utilising data encryption by means of asymmetrical cryptography methods with possibility to identification a person, releasing the copy of protected data without authorization hereto.

### TECHNICAL LEVEL

At the present time the problem of information security against unauthorised copying becomes more and more critical. Special attention is given to program security against pirate distribution, which cause significant damage to software manufacturers.

The existing methods of program protection could be divided into two major categories: hardware and software security.

When using hardware security methods, described in patents US 5826011 [1], US 6308170[2], the purchased software is accompanied with a certain technical device connected to the computer, on which the said software is used, responding to request of the program, which determines, based on reply of such device, whether its use is authorised by the manufacturer.

Such scheme has several disadvantageous features: utilisation of additional equipment significantly increase the cost of software. Moreover, such scheme makes it difficult for the user to utilise on different times a single copy of purchased software on several computers, even if the license agreement allows for such utilisation, since the user has to move protection equipment between computers. This method is frequently used in such a way that allows the creation of an emulator of protection equipment with further distribution of pirate copies of software together with such emulator. The other method to bypass such protection is to detect in the source code comparison locations of reply from such device against calculated template and elimination these check from code (for example, by replacing conditional transfer to unconditional).

Software security methods, as a rule, are based on serial numbers submitted to user when the product is purchased (for example, see patent US 6134659 [3]).

These serial numbers, entered by user during installation or utilisation of software, are normally further compared with template, which is either a constant specified in the program, or a function from data on user and/or equipment of user's computer, forwarded to program manufacturer for generation of a serial number. Sometimes a serial number acts as a key for decryption of encrypted source code or its parts.

Disadvantageous feature of this scheme is the possibility for illegal distribution of unlicensed program copies together with serial number, if it does not depend on individual configurations of the user's computer. In case such correlation exists, this creates a significant load on user support service, which has to provide registered users with a new serial number every time they change (for example, in case of upgrade or failure) computers elements, on which such number rely on. This is also not convenient for the users, who, after replacement of computer parts, cannot use formerly purchased software, until they communicate the new computer configuration to its manufacturer and receive a new number in reply. In this case there is a possibility which is left to eliminate from source code the check for correctness of a serial number (if it is not used as a key for code decryption).

### SPECIFICATION OF INVENTION

The present invention offers a method and program security system against unauthorised copying with the use of a method which significantly reduce or eliminate drawbacks of existing security methods.

More specifically, the current invention describes a method and security system with the use of asymmetrical cryptography algorithms. This allows for fixing program copy to specific user, as well as provides for lower probability for distribution among numerous users of a single program copy legally purchased by one of them. In case when such distribution occurred, there is a possibility to locate the user distributing illegal copies, in order to apply legislative actions against the latter.

One of the methods of the invention provides for encryption of executable code of program copy when it is sold, by means of asymmetrical cryptography method with the use of a public key obtained by the user. Encrypted program copy, using the above described method, prepared for sales to specific user, can not be decrypted, and therefore can not be executed by anybody besides the user who has a private key which makes a pair with a public key, used when the program copy was sold.

The present invention gives an important technical advantage, providing for program execution only by a user, who bought it from the manufacturer.

The present invention provides for another important technical advantage, allowing to determine, which user submitted it's program copy for illegal copying, without possibility to deny this fact by the user.

The present invention provides for another important technical advantage, giving the user a possibility to change computer configuration on which the protected program is running, without addressing to program manufacturer for a new key after that.

The present invention provides for another important technical advantage, giving the user a possibility to execution of protected program on any accessible computer, and not only on the user's computer, the features of which were known to program manufacturer.

The present invention provides for another important technical advantage, giving the possibility both to user and program manufacturer to revoke program copies, matching with respective private keys of uncontrollable users, making it impossible to execute these copies by persons who got access to such keys.

The present invention provides for another important technical advantage, allowing the user to remember only one serial number for all utilized programs, this number is the user's private key or password for access to such key.

### BRIEF DESCRIPTION OF DRAWINGS

For better understanding of the present invention and its advantages, hereby a reference is made to the following description which is considered jointly with attached drawings, where the respective numbers represent the respective elements, and where:
- FIGURE 1: represents the process of generation and execution of a program protected with the use of the present invention.
- FIGURE 2: represents the process of execution of a program, protected with the use of the present invention, when a revocation check of user's private key is made.
- FIGURE 3: shows the process of execution of a program, protected with the use of the present invention, when decryption of a source code is made in the course of its execution.
- FIGURE 4: shows a structural diagram of a computer, in which CPU contains a special module for checking user rights for program execution.
- FIGURE 5: shows a diagram, specifying the process of generation and execution of a program, protected with the use of the present invention, when both methods of symmetrical and asymmetrical cryptography are used simultaneously.

### MEANS OF INVENTION IMPLEMENTATION

The preferable implementations of the present invention are shown in figures, identical numbers are used as reference for identical and correlating parts of different drawings.

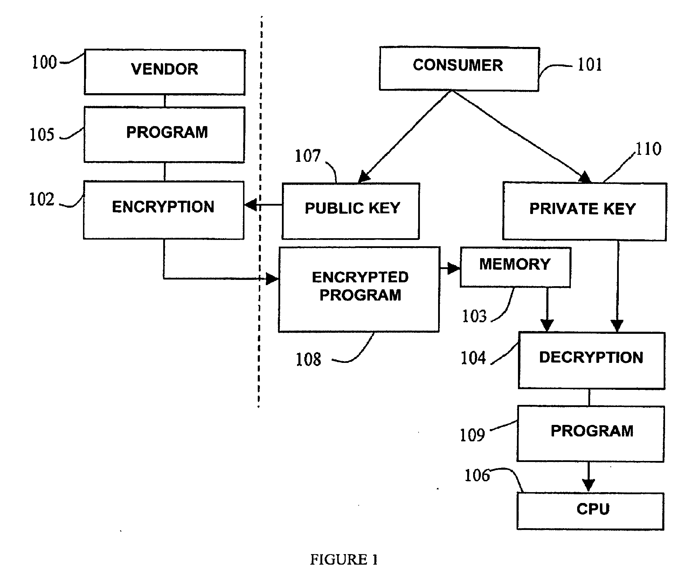

FIGURE 1 shows one of the implementations of program security system against unauthorised use, where user 101, willing to purchase a program copy 105, sends to distributor 100 its public key 107 (possibly as part of a certificate). In case of purchasing a program through Internet, when SSL protocol is used, it is possible to use the feature of this protocol - request for Client's public key. After obtaining such public key, Program vendor encrypt the program by means of this key, utilising asymmetrical algorithm (such as, for example, RSA - US patent 118 4405829 [4]) 102. The Vendor sends to the user an encrypted program 108 which was obtained as a result of this operation, the user can save it in memory 103 of its computer. The memory 103 means any information storage device, including RAM, hard drive and tapes.

When executing encrypted program 108 after removing from memory 103, it is decrypted by means of asymmetrical algorithm 104, respective algorithm 102, in this case the user's private key 110 is utilised creating a pair to key 107. The created, as a result of this, decrypted program copy 109, identical to program 105, is sent for execution to CPU 106 of the user's computer.

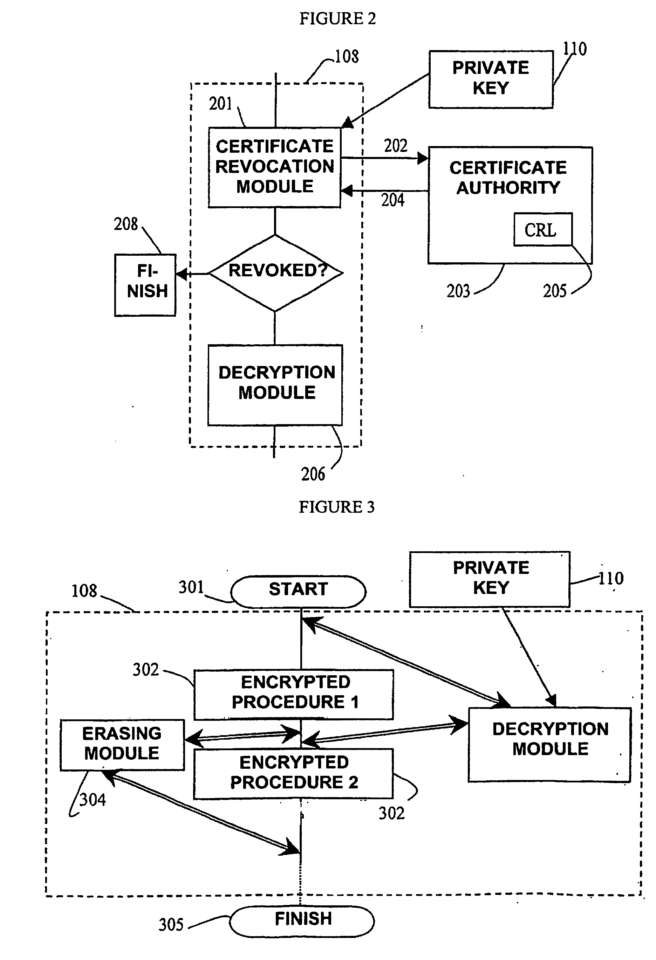

FIGURE 2 shows executable encrypted program 108, containing module 201 for revocation check of user's private key. This module, after receiving user's private key 110 as part of user's certificate, determines through information accompanying the key, the location of certificate revocation lists (CRL) 205. After that the program sends a request 202 to the storage of certificate revocation list 203 (as a rule, such storage is certificate authority, which authenticates user's public key).

The reply received from certificate authority 204, contains information on revocation of user's key. This reply can include digital signature, so that the requesting program can verify its authentication. Depending on reply the encrypted program either cancels its execution 208, or delegates administration of its main part of the code to decryption module 206.

FIGURE 3 shows encrypted program 108, which decrypt procedures' code immediately prior to their execution in order to complicate the process of bypassing protection by copying memory section, including decrypted source code. Such program contains one or more encrypted sections 302. When in the process of program execution it will be required to forward administration to such section, decryption module 206 is called out, which decrypts only this section of the program. At the end of execution of section 302, memory cleaning module 304 can be called out, which will delete the decrypted section code of encrypted program 302 in the memory of user's computer.

This process is repeated during execution of the next encrypted section.

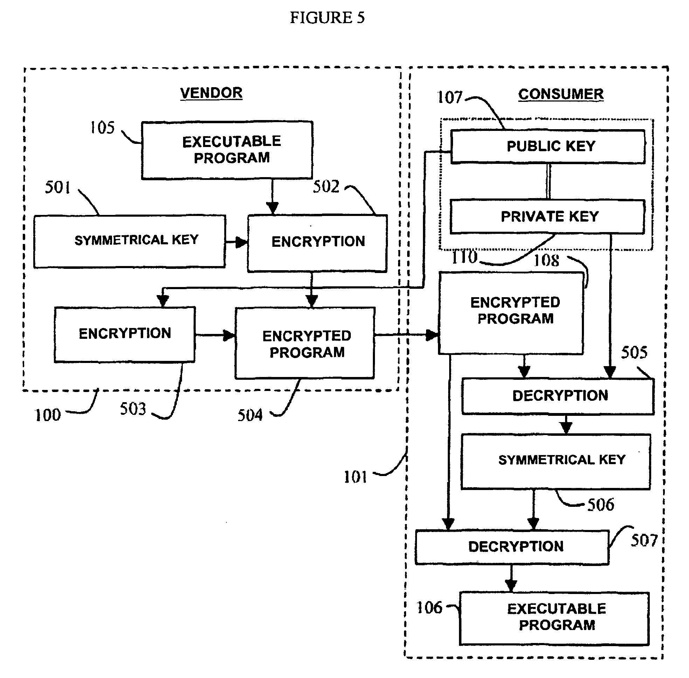

For further complication of bypassing protection in case, when both methods of symmetrical and asymmetrical cryptography are used simultaneously, as shown on FIGURE 5, different symmetrical keys can be used for encryption of various parts of program.

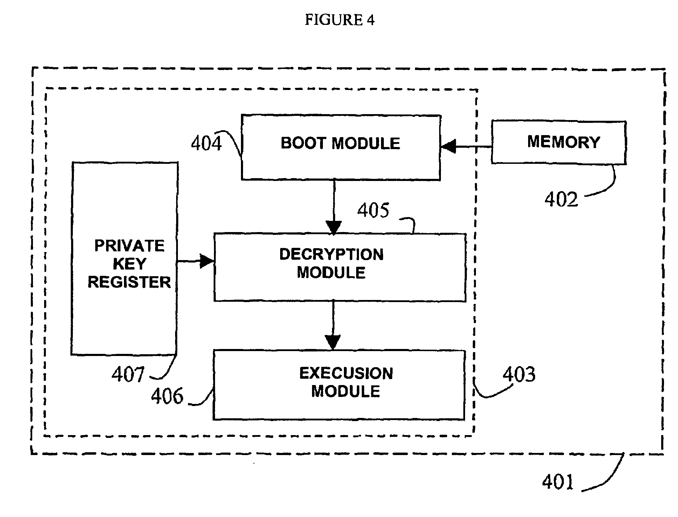

FIGURE 4 illustrates the operation of CPU 403, equipped with module 405 for decryption of information coming from memory 402 in accordance with the current invention. The program, encrypted by user's public key on computer 401, is located in memory 402, from where the CPU utilises selection of commands in machine code for their execution.

Before execution of encrypted program, user's private key is entered to private key register 407 located in the CPU. While executing the program, its encrypted executable code is loaded into CPU from the memory of boot module 404, which forwards encrypted codes of executable commands into decryption module 405. This module, utilising the content of private key register 407, decrypts command codes by converting them to condition suitable for execution by module 406, responsible for execution of actions, assigned by these commands. Moreover, program access to its decrypted code can be restricted only to its execution, not allowing its reading in the way of data. This restriction can be used to prevent leakage of decrypted information in case when the program (for example, as a result of a mistake resulted from buffer overload) is used for reading its decrypted code and its further recording to any memory in decrypted mode.

This scheme can be improved by introducing of encryption utilising methods, illustrated on FIGURE 5. For this purpose one more register for storage of the key for symmetrical cryptography algorithm 506 can be foreseen in the CPU, where this key is recorded after its decryption with the use of asymmetrical cryptographic algorithm 505, and one more decryption module 507, which decrypts encrypted information with the use of symmetrical cryptography algorithm and key 506 from the abovementioned register.

This scheme can also be extended not only to command codes, but to data processed by these commands. In this case it is also possible to encrypt information, received as a result of program execution, when such information is outputting from the CPU. For encryption, it is possible to use methods described in clarifications to FIGURES 1 and 5, which are used as methods for the use of information by Vendor.

FIGURE 5 shows further improvement of suggested protection method, given that symmetrical cryptography procedures, as a rule, are executed significantly faster than asymmetrical cryptography procedures.

When selling the program, the Vendor 100 is randomly generating the key 501 for symmetrical algorithm. After that source code 105 is encrypted with the use of the key 501 (step 502). At the same time the key 501 is also encrypted by means of asymmetrical cryptography (step 503). Public key 107 received from Consumer 101 serves as a decryption key. On the stage 504 the encrypted key 501 is added to encrypted source code resulting in encrypted program 108, which is forwarded to Consumer 101.

Consumer 101, while executing the encrypted program 108, primarily decrypts symmetrical algorithm key (step 505) by using private key 110, which creates a pair with public key 107. The key 506 obtained during this step, will be identical to key 501, generated by the Vendor. After that, the key 506 is used for decryption of executable source code (step 507). This results in getting the executable code 106, which coincides with program 105 and is executed by CPU of Consumer's computer.

In any of the described implementations of the present invention it is recommended to erase decryption keys from memory of Consumer's device immediately, if they are not required within a certain period of time (for example, the key that is used for decryption of executable source code, is not required after decryption of this code until the next execution of this program).

Particular interest should be given to utilisation of program protection in accordance with the present invention of digital certificates, issued by certificate authorities, which confirm matching of user personality with its public key. In this case at the attempt to distribute copies of program together with private key for its decryption (which is typical for protection schemes utilising serial number), it is possible to detect a Consumer who purchased this copy and forwarded his private key for distribution.

This scheme can also be easily applied to protection of information of any type (such as audio and video recordings), and not only to executable source codes. In this case decryption will be executed by application utilising these data (for example, applications for playback of audio or video recordings), or by operating system.

Whereas the present invention was described in details, it must be clear, that various changes, replacements and amendments hereto can be made without departuring from its spirit and scope of invention, according to its description in the attached formula of invention.

## Claims

1. Method of information protection against unauthorized use, consisting of the following steps:
by Vendor:
obtaining Consumer's public key by Vendor; and
encryption of sold information by means of asymmetrical cryptography utilising the said public
key; and
by Consumer:
obtaining Consumer's private key; and
decryption of purchase information utilising the said private key, corresponding to the said public key.

2. Method according to Paragraph 1, where the said public key is forwarded to the Vendor by the Consumer during the purchase of information.

3. Method according to Paragraph 2, where the said public key is transferred as part of digital signature under the purchase order.

4. Method according to Paragraph 2, where the said public key is taken by the Vendor from the key storage in accordance with information on the Consumer.

5. Method according to Paragraph 1, where decrypted information is destroyed after use.

6. Method according to Paragraph 1, where the purchased information consists of two or more encrypted sections, decrypted before their utilisation in such a way, that by the time of utilisation of one of them one or more of such sections are stayed encrypted.

7. Method according to Paragraph 6, where decrypted parts are destroyed after their use.

8. Method according to Paragraph 2, where Vendor receives the said public key as part of digital certificate, authenticating user's identity.

9. Method according to Paragraph 8, where the Vendor verifies the said digital certificate for validity and revocation.

10. Method according to Paragraph 1, where the program executable on Consumer's equipment prior to utilisation of encrypted information checks the said private key for revocation.

11. Method according to Paragraph 1, where the said public key and the said private key are generated by the Vendor, and, as a minimum, the said private key is given to the Consumer.

12. Method of information protection against unauthorized copying, consisting of the following steps:
by Vendor:
obtaining Consumer's public key;
generation of a random key for symmetrical cryptography algorithm;
encryption of protected information utilising the said symmetrical cryptography algorithm and the said random key; and
encryption of the said random key utilising asymmetrical cryptography algorithm and the said public key; and
by Consumer:
obtaining Consumer's private key;
decryption of encrypted said random key obtained from the Vendor, utilising asymmetrical cryptography algorithm, corresponding to asymmetrical cryptography algorithm, utilised by the Vendor, and the said private key; and
decryption of obtained from the Vendor encrypted information, utilising the said symmetrical cryptography algorithm and the said decrypted random key.

13. Method according to Paragraph 12, where the said public key is forwarded to the Vendor by the Consumer during the purchase of information.

14. Method according to Paragraph 13, where the said public key is transferred as part of digital signature under the purchase order.

15. Method according to Paragraph 12, where the Vendor gets the said public key from storage of keys on user information.

16. Method according to Paragraph 12, where decrypted information is destroyed after use.

17. Method according to Paragraph 12, where the purchased information consists of two or more encrypted sections, decrypted before their utilisation in such a way that by the time of decryption one of them or more sections stay encrypted.

18. Method according to Paragraph 17, where the said random keys for encryption of the said encrypted sections differ for, as a minimum, one pair of the said encrypted sections.

19. Method according to Paragraph 12, where the said decrypted random key is destroyed after its use for decryption of information, encrypted by such key.

20. Method according to Paragraph 17, where decrypted parts are destroyed after their use.

21. Method according to Paragraph 12, where the Vendor obtains the said public key as part of digital certificate authenticating user's identity.

22. Method according to Paragraph 21, where the Vendor checks the said digital certificate for validity and revocation.

23. Method according to Paragraph 12, where the program executed on Consumer's equipment prior to the use of encrypted information checks the said private key for revocation.

24. Method according to Paragraph 12, where the said private key and the said public key are generated by the Vendor, and, as a minimum, the said private key is sent to Consumer.

25. Method according to Paragraph 18, where the said decrypted random keys are destroyed after decryption of sections which were encrypted by these keys.

26. System of information protection against unauthorized copying, consisting of:
Vendor's equipment, intended for:
obtaining Consumer's public key; and
encryption of sold information by asymmetrical algorithm utilising the said key; and
Consumer's equipment, intended for:
obtaining Consumer's private key; and decryption of the purchased information by asymmetrical algorithm utilising the said private key.

27. System according to Paragraph 26, where the said public key is forwarded to the Vendor by the Consumer during the purchase of information.

28. System according to Paragraph 27, where the said public key is transferred as part of digital signature under the purchase order.

29. System according to Paragraph 27, where the said public key is forwarded with the use of computer network.

30. System according to Paragraph 26; where the Vendor takes the said public key from the key storage related to Consumer's information.

31. System according to Paragraph 30, where the Vendor requests and/or acquires the said public key through computer network.

32. System according to Paragraph 26, where the purchased information is forwarded to Consumer through computer network.

33. System according to Paragraph 26, where the purchased information represents the program, intended for execution by CPU, owned by the Consumer, and this program decrypts itself prior to execution, utilising the said private key.

34. System according to Paragraph 26, where decrypted information is destroyed after use.

35. System according to Paragraph 26, where the purchased information consists of two or more encrypted sections, decrypted before their utilisation, in such a way that by the moment of utilisation of one of them one or more such sections stay encrypted.

36. System according to Paragraph 35, where decrypted parts are destroyed after their use.

37. System according to Paragraph 26, where client's equipment contains CPU and memory, at the same time information in memory is encrypted utilising the said public key, and CPU contains the module for decryption of information, utilising the said private key prior to utilisation of such information by other CPU modules, so that information in a decrypted mode does not exist outside the CPU.

38. System according to Paragraph 26, where the Vendor acquires the said public key as part of digital certificate, authenticating user's identity.

39. System according to Paragraph 38, where the Vendor checks the said digital certificate for validity and revocation.

40. System according to Paragraph 26, where the program, executable on Consumer's equipment prior to utilisation of encrypted information checks the said private key for revocation.

41. System according to Paragraph 26, where the said keys are generated by the Vendor and, as a minimum, private key is forwarded to Consumer.

42. System according to Paragraph 37, where the program, executable on the said CPU, does not have the access to reading of its decrypted executable code.

43. System of information protection against unauthorized use, consisting of:
Vendor's equipment, intended for:
obtaining Consumer's public key;
generation of random key for symmetrical cryptography algorithm;
encryption of encrypted information utilising the said symmetrical cryptography algorithm and the said random key; and
encryption of the said random key with utilisation of symmetrical cryptography algorithm and the said public key; and
Consumer's equipment, intended for:
obtaining Consumer's private key;
decryption of obtained from Vendor the said encrypted random key, utilising asymmetrical cryptographic algorithm and the said private key; and
decryption obtained from the Vendor encrypted information, utilising symmetrical algorithm and decrypted random key.

44. System according to Paragraph 43, where the said public key is forwarded to the Vendor by the Consumer during the purchase of information.

45. System according to Paragraph 44, where the said public key is transferred as part of digital signature under the purchase order.

46. System according to Paragraph 44, where the said public key is forwarded with utilisation of computer network.

47. System according to Paragraph 43, where the Vendor takes the said public key from key storage related to customer's information.

48. System according to Paragraph 47, where the Vendor requests and/or obtains the said public key through computer network.

49. System according to Paragraph 43, where the purchased information is forwarded to Consumer through computer network.

50. System according to Paragraph 43, where the purchased information represents the program, intended for execution by CPU, owned by the Consumer, and this program decrypts itself prior to execution utilising the said private key.

51. System according to Paragraph 43, where decrypted information is destroyed after use.

52. System according to Paragraph 43, where the purchased information consists of two or more encrypted sections, decrypted before their utilisation, in such a way that by the moment of decryption of one of them one or more of these sections stays encrypted.

53. System according to Paragraph 52, where the said random keys for encryption of the said encrypted sections differ for, as a minimum, one pair of the said encrypted sections.

54. System according to Paragraph 43, where the said random key decrypted consumer's device is destroyed after its use for decryption of information encrypted by this key.

55. System according to Paragraph 52, where decrypted parts are destroyed after their use.

56. System according to Paragraph 43, where consumer's equipment contains CPU and memory, at the same time the purchased information in the said memory is encrypted utilising the said random key, and CPU contains a module for decryption of the said information from the said memory utilising the said random key prior to utilisation of the said information by other modules and the said CPU, so that the said information in decrypted mode does not exist outside of the said CPU.

57. System according to Paragraph 56, where the said CPU contains the module for decryption of the said random key utilising the said private key prior to utilisation of the said random key in the said module for decryption of said encrypted information, so that the said random key does not exist in decrypted mode outside of the said CPU.

58. System according to Paragraph 56, where the program executable on the said CPU, does not have access to reading its decrypted executable code.

59. System according to Paragraph 57, where executable program does not have access to reading its said decrypted random key.

60. System according to Paragraph 43, where the Vendor obtains the said public key as part of digital certificate, authenticating user's identity.

61. System according to Paragraph 60, where the Vendor checks the said digital certificate for validity and revocation.

62. System according to Paragraph 43, where the program, executable on Consumer's equipment prior to utilisation of encrypted information, checks the said private key for revocation.

63. System according to Paragraph 43, where the said private key and the said public key are generated by the Vendor, and, as a minimum, the said private key is forwarded to the Consumer.

64. System according to Paragraph 53, where decrypted the said random keys are destroyed after decryption of sections encrypted by these keys.

## Amended claims

### Amended claims under Art. 19.1 PCT

**1.** Method of protection against unauthorized use of information, consisting of the following steps:
by the Vendor:
the Vendor obtains the public key of the Consumer and decrypts the marketed information, using asymmetrical cryptography algorithm with the said public key and;
by the Consumer:
the Consumer obtains the private key of the Consumer corresponding to the said public key; and
decrypts the acquired information using the said private key corresponding to the said public key, in this case information is decrypted directly before its use and while information is not used it is stored encrypted by the said public key.

**2.** Method in accordance with patent claim 1 where the said public key is forwarded by the Vendor to the Consumer when acquiring information.

**3.** Method in accordance with patent claim 2 where the said public key is forwarded as part of digital signature under the purchase order.

**4.** Method in accordance with patent claim 2 where the Vendor obtains the said public key from the storage of keys related to Customer information.

**5.** Method in accordance with patent claim 1 where decrypted information is deleted after use.

**6.** Method in accordance with patent claim 1 where the acquired information consists of two or more encrypted parts decrypted before their use in such way that by the moment one part of it is used, the other part/parts of it remain encrypted.

**7.** Method in accordance with patent claim 6 where decrypted parts are deleted after use.

**8.** Method in accordance with patent claim 2 where the Vendor obtains the said public key as part of digital certificate of the user's identity.

**9.** Method in accordance with patent claim 8, where the Vendor checks the said digital certificate for validity and revocation.

**10.** Method in accordance with patent claim 1 where the program executed on the Customer's equipment checks that the said private key is responding before the use of protected information.

**11.** Method in accordance with patent claim 1 where the Vendor generates the said public key and the said private key and advise the Customer of, at least, the said private key.

**12.** Method of information protection against unauthorized duplication, consisting of the following steps:
by the Vendor:
the Vendor obtains the public key of the Consumer; and
generates the random key for asymmetrical cryptography algorithm;
encrypts information to be protected using the said asymmetrical cryptography algorithm and the said random key; and
encrypts the said random key using asymmetrical cryptography algorithm and the said public key; and
by the Consumer:
the Consumer obtains the private key of the Consumer corresponding to the said public key; and
decrypts the said encrypted random key obtained from the Vendor using asymmetrical cryptography algorithm corresponding to the asymmetrical cryptography algorithm used by the Vendor and the said private key, in which case protected information is decrypted directly before its use, when information is not used the said random key is stored decrypted using the said public key; and
decrypts protected information obtained from the Vendor using the said asymmetrical cryptography algorithm and the said decrypted random key.

**13.** Method in accordance with patent claim 12 where the said public key is forwarded to Vendor by the Consumer when acquiring information.

**14.** Method in accordance with patent claim 13 where the said public key is forwarded as part of digital signature under the purchase order.

**15.** Method in accordance with patent claim 12 where the Vendor obtains the said public key from the storage of keys related to Customer information.

**23.** Method in accordance with patent claim 12 where the program executed on Consumer's equipment checks that the said private key is responding before the use of protected information.

**24.** Method in accordance with patent claim 12 where the Vendor generates the said private key and the said public key and forwards at least the said private key to the Consumer.

**25.** Method in accordance with patent claim 18 where the said decrypted random keys are deleted after decrypting of parts encrypted by them.

**26.** System of information protection against unauthorized duplication consisting of:
the Vendor's equipment intended for:
obtaining of the Consumer's public key; and
decrypting of sold information by asymmetrical algorithm using the said key; and
the Consumer's equipment intended for:
obtaining of the private key of the Consumer corresponding to the said public key; and
decrypting of acquired information by asymmetrical algorithm using the said private key, in which case information is decrypted directly before its use, when information is not used it is stored encrypted by the said public key.

**27.** System in accordance with patent claim 26 where the said public key is forwarded by the Consumer to the Vendor when information is acquired.

**42.** System in accordance with patent claim 37 where the program executed on the said CPU does not have access to reading of its decrypted executable code.

**43.** System of protection against unauthorized use information consisting of:
the Vendor's equipment intended for:
obtaining of the Consumer's public key;
generation of the random key for symmetrical cryptography algorithm;
encrypting of information to be protected using the said symmetrical cryptography algorithm and the said random key; and
encrypting of the said random key using symmetrical cryptography algorithm and the said public key; and
the Consumer's equipment intended for:
obtaining of the private key of the Consumer, corresponding to the said public key;
decrypting of the said encrypted random key obtained from the Vendor using asymmetrical cryptography algorithm and the said private key, in which case protected information is decrypted directly before its use, when information is not used, the said random key is stored encrypted using the said public key; and
decrypting of protected information obtained from the Vendor using symmetrical cryptography algorithm and decrypted random key.

**44.** System in accordance with patent claim 43 where the said public key is forwarded by the Vendor to the Consumer when acquiring information.

**45.** System in accordance with patent claim 44 where the said public key is forwarded as part of digital signature under the purchase order.

**46.** System in accordance with patent claim 44 where the said public key is forwarded using computer network.

**47.** System in accordance with patent claim 43 where the Vendor obtains the said public key from the storage of keys related to Customer information.

**48.** System in accordance with patent claim 47 where the Vendor demands and/or obtains the said public key through computer network.

**49.** System in accordance with patent claim 43 where the acquired information is forwarded to the Consumer through computer network.

**50.** System in accordance with patent claim 43 where the acquired information is a program intended for execution by CPU owned by Consumer, and this program decrypts itself before execution using the said private key.

**51.** System in accordance with patent claim 43 where the decrypted information is deleted after use.

**52.** System in accordance with patent claim 43 where the acquired information consists of two or more encrypted sections decrypted before their utilisation in such a way, that by the time of utilisation of one of them one or more of such sections are stayed encrypted.

Statement under Art. 19.1 PCT
Based on the results of international search, the patent applicant has offered to amend patent claims 1, 12, 26 and 43 in order to make a more clear distinction between the document WO00/30319A1 referred to in the report and the claimed technology. Attached substituting pages contain underlined supplemented terms.

Offered amendments are made for clarification purposes and they do not get beyond the scope of the originally submitted international application.

According to Applicant's opinion, the main difference of the quoted document is that information is protected not only when it is forwarded to the user (Consumer), but it is also stored by the user in the format protecting against unauthorized use.

This feature is mentioned in description, but it was not expressed clearly enough in the respective patent claims.
